# EUROPEAN PATENT APPLICATION

(11) **EP 4 145 309 A1**
(43) Date of publication of application: **08.03.2023**
(21) Application number: 22151216.3
(22) Date of filing: 12.01.2022
(51) Int. Cl.: G06F 16/9536, G06Q 30/02, G06Q 50/00

(54) **METHOD OF PROVIDING USER PROFILE AND APPARATUS THEREFOR**

(30) Priority: 07.09.2021 KR 20210118977
(71) Applicant: Hyperconnect LLC, Seoul 06164 (KR)
(72) Inventor: AHN, Sang Il, 28363 Chungcheongbuk-do (KR); JANG, Yoon Woo, 06164 Seoul (KR); CHOI, Eun Hee, 06164 Seoul (KR)
(74) Representative: Zimmermann & Partner Patentanwälte mbB

(57) **Abstract**

According to the present disclosure, a method of providing a profile of a user using an electronic apparatus includes identifying states of a plurality of online users accessing a profile provision system (S501), determining at least one or more second users to be displayed on a terminal of a first user among the plurality of online users based on the states of the plurality of online users (S502), and providing profile information of the at least one or more second users to the terminal of the first user (S503), wherein the profile information of the at least one or more second users may include an indicator indicating a state of a corresponding second user.

## Description

### CROSS-REFERENCE TO RELATED APPLICATION(S)

This application claims the benefit of Korean Patent Application No. 10-2021-0118977, filed on September 7, 2021, in the Korean Intellectual Property Office, the disclosure of which is incorporated herein by reference.

### BACKGROUND

### 1. Field of the Invention

The present disclosure relates to a method of providing a user profile and an apparatus therefor.

### 2. Description of the Related Art

With the development of wireless communication technology, many people can be connected to many different people online. Such a connection may be made in various ways through voice calls, video calls, messages, or the like. Users can communicate with each other using portable terminals such as smartphones or smart tablets. Users who communicate with each other may know each other or may not know each other.

The connection between users who don't know each other may be made through a kind of user matching service. In this case, the user matching service may provide profiles of an unspecified number of users to certain users so that user matching can be made.

In user-to-user matching, as the degree of participation of users increases, the number of user-to-user matches can increase, and as the number of other users matching a user himself and/or herself increases, his/her interest in using the user matching service may increase. Therefore, there is a need to increase the degree of participation of users.

For a user who uses such a user matching service, his/her interest in using the user matching service and expectations for future use may be aroused depending on how profile information about numerous other users is provided. Accordingly, various methods are being used to provide a user profile.

### SUMMARY

An aspect of the present disclosure is to provide a method of providing a user profile and an electronic apparatus therefor.

Another aspect of the present disclosure is to provide benefits such as (but not limited to) further arousing a user's interest in using a user matching service, by providing various pieces of information about other users to the user of the user matching service in consideration of a relationship between the user and the other users. Such processes may enable a computer to identify relevant information about users based on interactions between the devices.

The technical aspect to be achieved in the present disclosure is not limited to the technical aspects as described above, and other technical aspects may be inferred from the following embodiments.

According to an aspect of the present disclosure, there is provided a method of providing a user profile by an electronic apparatus, including: identifying, by the electronic apparatus, states of a plurality of online users accessing a profile provision system; determining, by the electronic apparatus, at least one or more second users whose thumbnails are to be displayed in a terminal of a first user among the plurality of online users based on the states of the plurality of online users; and providing, by the electronic apparatus, profile information of the at least one or more second users to the terminal of the first user. The terminal of the first user may communicate with the electronic apparatus. The profile information of the at least one or more second users may include an indicator, displayed on a display of the terminal of the first user, indicating a state of a corresponding second user.

Further, according to another aspect of the present disclosure, there is provided an electronic apparatus for providing a user profile, including a communication device and a processor. The processor may be configured to identify states of a plurality of online users accessing a profile provision system, determine at least one or more second users to be displayed in a terminal of a first user among the plurality of online users based on the states of the plurality of online users, and provide profile information of the at least one or more second users to the terminal of the first user via the communication device. The profile information of the at least one or more second users may include an indicator indicating a state of a corresponding second user.

Further, according to still another aspect of the present disclosure, there is provided a terminal of a first user for providing profiles of a plurality of online users to the first user, including a communication device, an output device, and a processor. The processor may be configured to allow the terminal to access a profile provision system via the communication device, receive profile information about at least one or more second users accessing the profile provision system, from an electronic apparatus associated with the profile provision system via the communication device, and control the output device to display the profile information of the at least one or more second users on a first screen, which may include at least one graphical user interface. The at least one or more second users may be determined based on a state of each of a plurality of online users accessing the profile provision system, and the profile information of the at least one or more second users may include an indicator indicating a state of a corresponding second user. Details of other example embodiments are included in the detailed description and the drawings. The output device of the terminal of the first user may comprise a display operable to present different screens for displaying different information to the first user. The screens may overlap each other.

According to the present disclosure, in providing a user of a user terminal with profiles about other users, it is possible to additionally provide, on a screen of the user terminal, a region in which only pieces of profile information about other online users who are currently accessing the system which provides the service are separately displayed.

According to the present disclosure, a user of a user terminal may be provided with profiles about other users who are currently accessing the system which provides the service, by using a method of displaying on the screen of the user terminal that another online user has performed a predetermined activity with respect to his/her relationship with the user of the user terminal. This may, amongst other benefits, actively induce the user and any of the other users to actively match with each other, and further arouse the user's interest, thereby allowing the user to more actively use the user matching service.

Further, according to the present disclosure, since it may be possible to distinguish a user who has expressed a good feeling for someone among online users, there is an advantage of increasing the probability of matching to increase a user's degree of participation and improve the experience of a plurality of users. Such processes may improve a user interface by allowing for real-time filtering, ranking, and/or emphasizing elements in a list.

Moreover, the technical solution provided by the present disclosure allows to manage matching users more easily by sorting and providing only online users among all users. Thus, only users which are currently online may be considered which improves user experience and provides for a more efficient matching. Furthermore, since the indication of the state of the user changes according to the change of the user's status only in the state in which the profile information of the second user is displayed, there is an aspect in which resources are saved.

The effects of the present disclosure are not limited to the above-mentioned effects, and other effects not mentioned will be clearly understood by those skilled in the art from the description of the claims.

### BRIEF DESCRIPTION OF THE DRAWINGS

FIG. 1 illustrates a system for providing a user profile according to an example embodiment.
FIG. 2 is a diagram illustrating a first screen of a first user terminal according to an example embodiment.
FIG. 3 is a diagram illustrating a list displayed on the first screen of the first user terminal according to an example embodiment.
FIG. 4 is a diagram illustrating a second screen of the first user terminal according to an example embodiment.
FIG. 5 is a flowchart illustrating a method of providing a profile according to an example embodiment.
FIG. 6 is a block diagram illustrating an electronic apparatus for providing profile information according to an example embodiment.
FIG. 7 is a block diagram illustrating a user terminal for providing profile information according to an example embodiment.

### DETAILED DESCRIPTION

The terms used in the example embodiments are selected from currently widely used general terms as much as possible while taking functions in the present disclosure into consideration, but may vary based on intentions of those skilled in the art, judicial precedents emergence of new technologies, or the like. Also, in particular cases, terms that are arbitrarily selected by the applicant of the present disclosure may be used, and in this case, the meanings of these terms may be described in detail in the corresponding disclosure. Accordingly, the terms used herein should be defined based on the meanings thereof and the content through the specification.

When a part "includes" a constituent element through the specification, this means that the part may further include other constituent elements, rather than excluding other constituent elements, unless other stated. In addition, the terms such as "unit" and "module" used herein may refer to a unit that performs at least one function or operation, which may be realized as hardware or software, or may be realized as a combination of hardware and software.

The expression "at least one of a, b, and c" may include the following meanings: 'a alone', 'b alone', 'c alone', 'both a and b together', 'both a and c together', 'both b and c together', or 'all three of a, b, and c together'.

In the present disclosure, a "terminal" may be implemented as, for example, a computer or a portable terminal capable of accessing a server or another terminal through a network. Here, the computer may include, for example, a notebook, a desktop computer, and/or a laptop computer which are equipped with a web browser. The portable terminal may be a wireless communication device ensuring a portability and a mobility, and include (but is not limited to) any type of handheld wireless communication device, for example, a tablet PC, a smartphone, a communication-based terminal such as international mobile telecommunication (IMT), code division multiple access (CDMA), W-code division multiple access (W-CDMA), long term evolution (LTE), or the like.

In the following description, embodiments of the present disclosure will be described in detail with reference to the accompanying drawings so that those skilled in the art can easily carry out the present disclosure. The present disclosure may be embodied in many different forms and is not limited to the example embodiments described herein. In the present disclosure, an item may mean a single item or a set of items of the same type. Hereinafter, example embodiments of the present disclosure will be described with reference to the drawings.

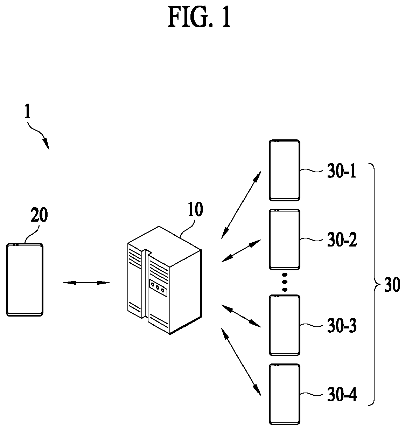

FIG. 1 illustrates a system for providing a user profile according to an example embodiment.

Referring to FIG. 1, a profile provision system 1 may include an electronic apparatus 10, a first user terminal 20, and a plurality of second user terminals 30-1 to 30-4 (hereinafter "second user terminals 30"). In the profile provision system 1 illustrated in FIG. 1, only constituent elements relating to the example embodiment are illustrated. In addition, although the four second user terminals 30 are exemplarily illustrated in FIG. 1, the number of second user terminals 30 is not limited thereto. Therefore, those skilled in the art will recognize that, in addition to the constituent elements illustrated in FIG. 1, other general-purpose constituent elements may be further included in the profile provision system 1.

For example, the profile provision system 1 may include a system that provides not only a user profile but also other communication services such as (but not limited to) a video call service. A video call service refers to a service in which a plurality of users can communicate with each other by transmitting their own videos to another person using their respective terminals and receiving the other person's videos. Users who use the video call service may send and receive video and audio using their respective terminals, and also send and receive other forms of communication such as (but not limited to) text using a chatting function. A user who wants to use the video call service may directly select a counterpart to whom a video call is made, and use the video call service if the counterpart accepts the video call. Alternatively, the electronic apparatus 10 that provides the video call service may select another party in a random manner or a predetermined manner, and thus the user may use the video call service together with the selected counterpart.

The electronic apparatus 10 may communicate with the first user terminal 20 and the second user terminal 30 through a network (not illustrated). The network used herein may include, for example (but not limited to), a local area network (LAN), a wide area network (WAN), a value added network (VAN), a mobile radio communication network, a satellite communication network, and/or combinations thereof. The network may be a data communication network in a comprehensive sense such that constituent subjects of each network can smoothly communicate with each other, and may include, for example (but not limited to), a wired Internet, a wireless Internet, and/or a mobile radio communication network. The wireless communication may include, for example, but is not limited to, wireless LAN (Wi-Fi), Bluetooth, Bluetooth low energy (Bluetooth low energy), Zigbee, WFD (Wi-Fi Direct), UWB (ultra wideband), infrared communication (IrDA, infrared Data Association), NFC (Near Field Communication), and/or the like.

According to an example embodiment, the electronic apparatus 10 may be an apparatus included in a server that has user profiles stored therein and provides the user profiles to at least one user terminal. For example, the electronic apparatus 10 may manage the server to determine at least one or more second users and profile information of the at least one or more second users to be displayed in the first user terminal 20.

The electronic apparatus 10 may identify states of a plurality of online users who are accessing the profile provision system 1. The state of each of the plurality of online users may include real-time access information of each user and information about a good-feeling expression history or the like for other users other than a user himself/herself. According to an example embodiment, the first user terminal 20 may be in a state of accessing the profile provision system 1, and the plurality of online users may be users whose own accounts are assigned to the profile provision system 1. Hereinafter, a user and a user terminal corresponding to the user will be used synonymously for the sake of convenience of description.

The electronic apparatus 10 may determine (or identify) at least one or more second users from the plurality of online users other than the first user, based on the identified states of the plurality of online users, where a second user is listed, or displayed as a thumbnail, in the first user terminal 20. According to an example embodiment, the at least one or more second users may include a user of a terminal accessing the profile provision system 1 among the plurality of online users at a point in time when the first user terminal 20 accesses the profile provision system 1.

The electronic apparatus 10 may provide profile information of the at least one or more second users to the first user terminal 20. Here, the profile information of the at least one or more second users may include at least one indicator indicating a state of the corresponding second user from the one or more second users. The state of each of the at least one or more second users may include, but is not limited to, at least one of whether each of the second user terminals 30 is accessing the profile provision system 1 and whether each of the second user terminals 30 has input a good-feeling expression for the first user.

A users' profile information may also include one or more images, and/or one or more of various descriptors for that user, such as (but not limited to) name, age, profession, hobbies, interests, distance/location, likes/dislikes, and/or other information describing the user. This information may be input by the user and/or gathered via other methods.

According to an example embodiment, the first user terminal 20 may display the indicator indicating the state of each second user in the form of an icon, a badge, or the like in association with the profile of each of the second users, and using at least one of color, size, shape, location, motion and/or other features, based on whether each of the second users has input a good-feeling expression for the first user.

According to an example embodiment, the electronic apparatus 10 may determine (or identify) a third user, who has input a good-feeling expression for the first user among the plurality of online users. The third user may not exist or a plurality of third users may exist. That is, in the present disclosure, the second user may be defined as a user who is being displayed in the first user terminal 20 among the plurality of online users, and the third user may be defined as a user who has input a good-feeling expression for the first user among the plurality of online users. Accordingly, each of the plurality of online users in the present disclosure may be defined as either or both the second user and the third user. It should not be understood that the second user and the third user are necessarily different users.

In the case in which the third user who has input a good-feeling expression for the first user according to an example embodiment is included in the at least one or more second users displayed in the first user terminal 20, in response to the input of the good-feeling expression for the first user performed by the third user, the electronic apparatus 10 may provide, to the first user terminal 20, a predetermined piece of information indicating that the third user has input a good-feeling expression for the first user. The first user terminal 20 may change and display the indicator included in the profile information for the third user. For example, one user (for example, 30-1) of the at least one or more second users 30-1, 30-2, 30-3, and 30-4 displayed in the first user terminal 20 may be a user who has not input the good-feeling expression for the first user. When the second user 30-1 inputs a good-feeling expression for the first user while being displayed in the first user terminal 20, the electronic apparatus 10 may determine the second user 30-1 to also be a third user. When it is determined that the second user 30-1 corresponds to also being a third user, the electronic apparatus 10 may transmit, to the first user terminal 20, information indicating this (namely, indicating that the second user 30-1 displayed in the first user terminal 20 has input the good-feeling expression for the first user). When the first user terminal 20 receives the information indicating that the second user 30-1 corresponds to a third user from the electronic apparatus 10 in a state where the second user 30-1 has been displayed in the first user terminal 20, the first user terminal 20 may change and display an indicator included in the profile information for the second user 30-1.

According to an example embodiment, in the case in which the third user is not included in the at least one or more second users 30-1, 30-2, 30-3, and 30-4 displayed in the first user terminal 20, in response to the input of the good-feeling expression for the first user performed by the third user, the electronic apparatus 10 may provide the profile information of the third user to the first user terminal 20. In response to the input of the good-feeling expression for the first user performed by the third user, the first user terminal 20 may display the profile information of the third user who has input the good-feeling expression for the first user by displaying an indicator such as (but not limited to) a motion image in a region in which the profile information of the third user is to be provided and the profile information of the third user in the region is displayed after a certain period of time.

According to an example embodiment, the first user terminal 20 may prevent the displayed profile information of the second user from being displayed any more after a preset time. Specifically, the profile information of the second user among the at least one or more second users, which is being displayed in the first user terminal 20 and is accessing the profile provision system 1, may be removed after a first period of time from a time point displayed in the first user terminal 20. Further, when the profile information of the second user among the at least one or more second users is being displayed in the first user terminal 20, and the second user ceases access of the profile provision system 1 before the first period of time elapses, the second user's profile information may be removed from the first user terminal 20 after a second period of time from a time point when the accessing is released. In this case, the second period of time may be different from the first period of time (that is, the first period of time>the second period of time, or the first period of time<the second period of time).

According to an example embodiment, in the case in which at least one profile information is removed from the first user terminal 20, a user listed at the top of a queue among the plurality of online users may be selected as a subsequent second user and profile information of the subsequent second user may be further displayed in the first user terminal 20. In this case, the number of pieces of profile information further displayed in the first user terminal 20 may correspond to the number of pieces of removed profile information.

According to an example embodiment, the electronic apparatus 10 may rank the plurality of online users based on the state of each of the plurality of online users, in order to determine at least one or more second users to be displayed in the first user terminal 20. For example, with reference to time durations during which terminals of the plurality of online users maintained access to the profile provision system 1, the electronic apparatus 10 may capture a time point at which each user terminal initially accesses the profile provision system 1, and may log a time duration of the connection of each user terminal with the profile provision system 1 and the like based on the captured time point. In some example embodiments, the electronic apparatus 10 may log information about whether each of the plurality of online users has input a good-feeling expression for the first user and/or the number of such inputs, whether each of the plurality of online users has queried a profile of the first user and/or the number of times of inquiries, or the like. Thus, the electronic apparatus 10 may determine rankings for the users based on at least one of various pieces of information such as whether each of the plurality of online users has input the good-feeling expression for the profile of the first user, the number of times of the input of good-feeling expressions performed by other users associated with the profile provision system 1, the time duration during which the terminals maintained access to the profile provision system 1, and the like. The electronic apparatus 10 may configure a queue list of the plurality of online users to be displayed in the first user terminal 20 based on the determined rankings. Thus, the electronic apparatus 10 may determine the order of the second user to be displayed in the queue list. Further, the electronic apparatus 10 may select a predetermined number of second users among the plurality of online users based on the rankings. The predetermined number used herein may refer to the number of pieces of profile information which can be displayed on one screen of the first user terminal 20. As an example, when four pieces of profile information can be displayed on one screen, four second users may be selected.

The first user terminal 20 may communicate with the electronic apparatus 10 via a network to access the profile provision system 1. Then, the first user terminal 20 may receive, from the electronic apparatus 10, the pieces of profile information of at least one or more second users who are determined based on the state of each of the plurality of online users accessing the profile provision system 1, and display the pieces of received profile information of the at least one or more second users on a designated interface such as (but not limited to) a first screen of the first user terminal 20. In this case, the pieces of profile information of the at least one or more second users may be displayed in a format such as (but not limited to) a list located in a certain area such as (but not limited to) the top or bottom of the first screen, and each set of profile information may include an indicator indicating the state of each of the second users. According to an example embodiment, the first user terminal 20 may display the indicator of each of the at least one or more second users at a location associated with an image corresponding to each profile (for example, a preset location with reference to an image corresponding to the profile of each of the second users (for example, the upper right side of the image corresponding to the profile)). Further, the first user terminal 20 may display, on the first screen, profile information of a fourth user, who may or may not be included in the list and whose profile is stored in the profile provision system 1.

According to an example embodiment, the first user terminal 20 may receive a selection input for any one of the pieces of profile information of the at least one or more second users. Then, the first user terminal 20 may transmit information about the received selection input to the electronic apparatus 10. Upon receiving the selection input information, the electronic apparatus 10 may provide detailed information to the first user terminal 20 regarding the second user corresponding to the selected profile information. Then, the first user terminal 20 may display the received detailed information on, for example, a second screen thereof, where the second screen may include at least one graphical user interface. The second screen may be displayed so that the second screen overlaps the first screen in a pop-up manner, is accessed via a swipe, or is shown in various other manners such that it is differentiated from the first graphical user interface. The first user terminal 20 may dim a portion of the first screen that is not overlapped by the second screen.

According to an example embodiment, the first user terminal 20 may display a label of the second user corresponding to the selected profile information on the second screen. In this case, the label may be displayed differently depending on whether the second user corresponding to the selected profile information has input a good-feeling expression for the first user. In other words, the display of the label may vary depending on whether the second user is merely a user accessing the profile provision system 1, or a user who has input a good-feeling expression for a user whose profile information is displayed. Further, the first user terminal 20 may display the label of the second user at a preset position (for example, the upper right side of the image of the second user) with reference to the image of the second user.

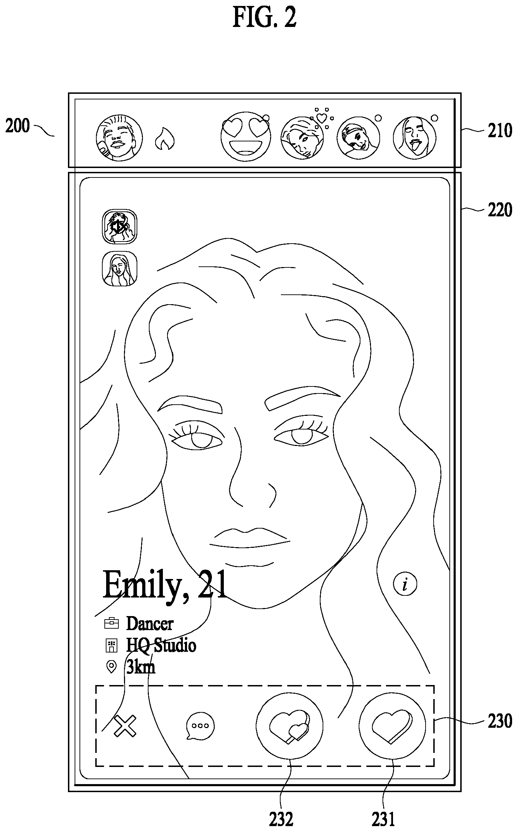

FIG. 2 is a diagram illustrating a first screen 200 of the first user terminal 20 according to an example embodiment.

According to an example embodiment, the first screen 200 may include a list region 210 and information 220 on a fourth user not included in the list region 210, which are displayed in the first user terminal 20. The second user displayed in the list region 210 and the fourth user may be users whose profiles are stored in the profile provision system 1, and are currently accessing the profile provision system 1, or release the accessing of the profile provision system 1. In some instances, the second user may be a user currently accessing the profile providing system 1 at the time point at which the first user terminal 20 accesses the profile providing system 1. The information 220 about the fourth user may be displayed in a preset region (for example, a region below the list region 210) at a position distinct from the list region 210 in the first screen 200.

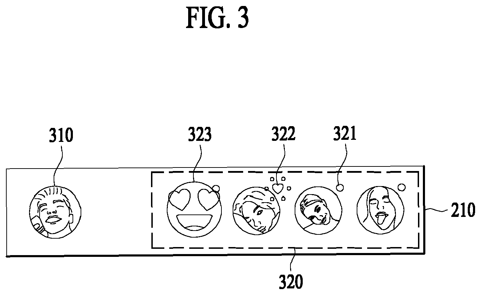

According to an example embodiment, the list region 210 may include pieces of profile information about the at least one or more second users determined to be displayed in the first user terminal 20 by the electronic apparatus 10, among the plurality of online users accessing the profile provision system 1. Details of the list region 210 will be described below with reference to FIG. 3.

According to an example embodiment, the information 220 on the fourth user may include an image of the fourth user and personal information of the fourth user. As an example, the image of the fourth user, which is one provided to the profile provision system 1 by the fourth user, may include photograph information indicating the fourth user. The personal information of the fourth user may include a name, age, occupation, and residence of the fourth user. Further, the personal information of the fourth user may include approximate distance information from a location of the first user terminal 20 to the residence of the fourth user. Such distance information may be based on location-based information of the first user terminal 20 received by the electronic apparatus 10, and may be information calculated by the electronic apparatus 10 based on the residence information provided by the first user to the profile provision system 1. Alternatively, the distance information may be information calculated based on location-based information of the first user terminal 20 itself or the residence information provided by the first user to the profile provision system 1.

According to another example embodiment, the fourth user may also be one of the second users displayed in the list region 210. When the information 220 for the fourth user is displayed on the first screen 200, the profile information of the fourth user may be additionally displayed in the list region 210. In this case, the profile information of the fourth user may be additionally displayed in the list region 210 by displaying a motion image in a region where the profile information of the fourth user added in the list region 210 is to be displayed as the information 220 about the fourth user is displayed on the first screen 200, and displaying the profile information of the fourth user after a lapse of a certain period of time from the display of the motion image. According to an example embodiment, the motion image displayed as the profile information of the fourth user is added in the list region 210 may be a preset motion image and may be identical to or different from the motion image displayed when the profile information of a third user is added in the list region 210.

According to an example embodiment, the first screen 200 may further include a good-feeling expression region 230 in which the first user inputs a good-feeling expression for the fourth user. The good-feeling expression region 230 may be displayed so that the good-feeling expression region 230 and the information 220 for the fourth user overlap. The good-feeling expression region 230 may include a first good-feeling expression button 231 and a second good-feeling expression button 232 for the fourth user. According to an example embodiment, the first good-feeling expression button 231 may be an interface for a general good-feeling expression for the respective fourth user, and the second good-feeling expression button 232 may be an interface for a good-feeling expression stronger than that of the first good-feeling expression button 231 and may have a higher priority than the first good-feeling expression. Thus, the good-feeling expression region 230 is a user input region which may comprise at least two user input sub-regions each configured to receive an input of the user representing different levels of good-feeling expressions.

According to an example embodiment, the second good-feeling expression button 232 may be activated with respect to a user permitted by the electronic apparatus 10. That is, when the first user of the first user terminal 20 is not a user permitted by the electronic apparatus 10, the second good-feeling expression button 232 in the first user terminal 20 may be displayed in a deactivated state or may not be displayed. As another example, when the first user of the first user terminal 20 is not a user permitted by the electronic apparatus 10, the function of inputting the strong good-feeling expression may not be performed even if the first user clicks the second good-feeling expression button 232.

According to an example embodiment, the first user may perform input that requests profile information of another user in addition to the input of the good-feeling expression. In that case, upon receiving the input from the first user, the first user terminal 20 may replace the fourth user currently displayed in the first user terminal 20, with another user. For example, the first user may request profile information of another fourth user by operating the screen of the first user terminal 20 in a specific action (for example, swipe, double touch, slide-up, slide-down, button touch, or the like). In this case, the exposure order of the fourth user may be determined randomly from the plurality of users stored in the profile provision system 1. Also in a situation in which the information 220 for the fourth user is changed, the profile information displayed in the list region 210 may be irrelevant to the change of the information 220 on the fourth user. That is, the change of the information 220 about the fourth user does not affect the update of the list included in the list region 210.

FIG. 3 is a diagram illustrating the list region 210 displayed on the first screen 200 of the first user terminal 20 according to an example embodiment.

According to an example embodiment, the list region 210 may include profile information 310 of the first user and a list 320 including the pieces of profile information of the at least one or more second users. An account of the first user may be stored in the first user terminal 20, and the profile information 310 of the first user may include information based on user information provided to the profile provision system 1 by the first user. As an example, the profile information 310 of the first user may include an image of the first user, and the image may be displayed inside a frame, such as a circle.

The list 320 may include a predetermined number of pieces of profile information of the second users. In FIG. 3, four pieces of profile information are displayed as an example for the sake of convenience of description. According to an example embodiment, the profile information to be displayed in the list 320 may include a profile of each of the plurality of second users and an indicator indicating a state of each of the plurality of second users. The profile of the second user may include an image of the second user and may be displayed inside a frame, such as a circle, as in the profile information 310 of the first user. The state of the second user may be represented by an indicator. The indicator may be determined based on at least one of whether the second user accessing the profile provision system 1 and whether the second user has input a good-feeling expression for the first user. Referring to FIG. 3, the indicator indicating the state of each of the second users may be displayed at the upper right side of the profile of each of the second users.

According to an example embodiment, when one of the second user are currently accessing the profile provision system 1, the state of that second user may be displayed as an online state 321. Further, when the second user has input a good-feeling expression for the first user, the state of the second user may be displayed as an attraction state 322. According to an example embodiment, the online state 321 and the attraction state 322 may be differentiated from each other by at least one of color, size, shape, location, and/or motion. For example, when the online state 321 is indicated using a green dot, the attraction state 322 may be indicated using a heart dot.

According to an example embodiment, when a user who has input a good-feeling expression for the first user among the plurality of online users is additionally confirmed, the electronic apparatus 10 may determine whether the respective user has been already included in the list 320 displayed on the first user terminal 20, or is not included in the list 320. The electronic apparatus 10 may transmit the profile information of the second user to the first user terminal 20 such that the profile information is displayed in the list 320 when the list 320 of the first user terminal 20 is updated.

Specifically, the electronic apparatus 10 may confirm a third user who has input a good-feeling expression for the first user among the plurality of online users, and determine whether the third user is included in the plurality of second users displayed in the list 320. When it is determined that the third user is included in the plurality of second users displayed in the list 320, the electronic apparatus 10 may transmit a predetermined piece of information (profile information about the third user, information indicating that the third user has input the good-feeling expression for the first user, or the like) to the first user terminal 20 so as to change and display an indicator included in the profile information of the third user in the list 320 in response to the input of the good-feeling expression by the third user. Referring to FIG. 3, the third user before inputting the good-feeling expression for the first user is in an online state, and thus the indicator included in the profile information of the third user is displayed as being in the online state 321. Then, when the profile information of the third user is being displayed in the list 320, and the third user inputs the good-feeling expression for the first user, the indicator included in the profile information of the third user at the time of inputting the good-feeling expression may be changed into the attraction state 322.

According to yet another example embodiment, when it is determined that the third user is not included in the plurality of second users displayed in the list 320, the electronic apparatus 10 may transmit a predetermined piece of information to the first user terminal 20 for including the profile information of the third user in the list 320 in response to the input of the good-feeling expression by the third user. According to an example embodiment, when the profile information of the third user that has not been included in the list 320 is included in the list 320, the profile information of the third user may be inserted in the list 320 in a slot-in manner after exhibiting a certain effect. For example, a motion image 323 may be displayed in a region where the profile information of the third user is to be displayed, and the profile information of the third user may be displayed in the list 320 after a preset period of time has elapsed from the display of the motion image 323. Referring to FIG. 3, the motion image 323 may be displayed as a moving heart emoji, and the profile information of the third user may be displayed in the list 320 after a predetermined period of time (for example, 3 seconds) has elapsed from the display of the motion image 323. In this case, since the third user is a user who has input the good-feeling expression for the first user, the state of the third user may be displayed in the attraction state 322.

The input of the good-feeling expression for the first user by the third user may be performed as the third user inputs the good-feeling expression for the profile information of the first user using his/her terminal. As an example, the profile information of the first user may be included in a list displayed on the terminal of the third user, and/or may be displayed like the information 220 for the fourth user in FIG. 2 instead of being included in the list.

According to an example embodiment, the profile information of a second user who continues to access the profile provision system 1 among the plurality of second users displayed in the list 320 may not be displayed in the list 320 after a lapse of a first period of time from the time point when the profile information is displayed in the list 320. Alternatively, the profile information of a second user who has discontinued accessing the profile provision system 1 before the lapse of the first period of time among the plurality of second users who are displayed in the list 320 may not be displayed in the list 320 after a second period of time from the time point of the discontinuation of access. In this case, the second period of time may be the same as, or shorter or longer than, the first period of time. For example, the profile of a second user maintaining access of the profile provision system 1 may disappear from the list 320 in a slot-out manner after 20 seconds. However, when a second user in the slot-in state ceases to access the profile provision system 1 before disappearing from the list 320 in the slot-out manner, the profile of this second user may disappear from the list 320 in the slot-out manner after 5 seconds from the time point when the second user discontinues access. In this case, the slotted-out profile may disappear from the list 320 along with a motion effect. Further, when at least one profile is removed from the list 320 in the slot-out manner, profiles of other second users may be added based on the number of removed profiles. In this case, a blank may be generated by the removed profiles. The profile in the slot-in state may move in a common direction to fill the blank, and a new profile may be added to the trailing end of the list 320. For example, when profile information of user number two (among the second users) from the left side in the list 320 is removed, profiles of users three and four (among the second users) from the left side in the list 320 may move to the left side on a slot-by-slot basis, and a newly added profile may be inserted from the right side in the list 320 in the slot-in manner. According to an example embodiment, when at least one profile information disappears from the list 320 in the slot-out manner, a user (with high priority) positioned at the top of the queue among the plurality of online users, who are listed through the server, may be determined as a subsequent second user and profile information of the subsequent second user may be added in the list 320. In this case, the number of profiles to be added in the list 320 may correspond to the number of profiles removed from the list 320.

According to an example embodiment, when a user using the profile provision system 1 determines that another user is not an appropriate or desired selection, the user may report such user to the profile provision system 1. For example, when the first user determines that the profile information of the second user included in the list 320 of his/her terminal is not appropriate, the first user may report the inappropriate second user to the electronic apparatus 10 using the first user terminal 20, and the electronic apparatus 10 may determine that the profile information of the inappropriate second user is removed in the slot-out manner from the list 320 displayed on the first user terminal 20. The profile information that is slotted-out due to reporting may be removed from the list 320 without a separate motion effect, unlike the slot-out removal by the release of the accessing or the update of the list 320.

According to an example embodiment, the electronic apparatus 10 may identify the states of the plurality of online users and determine rankings of the plurality of online users based on the identified states. Further, the electronic apparatus 10 may list the plurality of online users based on the rankings to create a queue, and transmit the queue to the first user terminal 20. Alternatively, the electronic apparatus 10 may determine the second user to be displayed in the list 320 from the plurality of online users listed based on the rankings, and transmit profile information of the determined second user to the first user terminal 20.

According to an example embodiment, the electronic apparatus 10 may determine rankings of the plurality of online users based on whether each of the plurality of online users has input a good-feeling expression for the profile of the first user, and/or the number of times of the inputs.

According to an example embodiment, the electronic apparatus 10 may determine rankings of the plurality of online users based on the number of good-feeling expressions input for each of the plurality of online users by other users associated with the profile provision system 1. For example, a user who has received a lot of good-feeling expressions from other users may be specified as a popular user and may have higher ranking than other non-popular users.

According to an example embodiment, the electronic apparatus 10 may determine rankings of the plurality of online users based on at least one of a time point at which each of the plurality of online users accesses the profile provision system 1 and a time duration during which each of the plurality of online users maintains access of the profile provision system 1.

According to an example embodiment, the electronic apparatus 10 may determine rankings of the plurality of online users based on whether each online user is a person who has input a good-feeling expression for the profile of the first user, whether each online user is a popular user who has received a lot of good-feeling expressions from other users, whether each online user is a person who has just accessed, or whether each online user is a person who maintains access for a long period of time, and the like. For example, the plurality of online users with respect to the first user may be prioritized based on criteria in a particular order such as (but not limited to): a user who has input a good-feeling expression for the first user, a popular user who has received a preset number or more of good-feeling expressions from other users, a user who has accessed the profile provision system 1 during a preset time period or less, and a user who has continued to access the profile provision system 1 during a preset time period or more. Further, even if the plurality of online users are listed in order of ranking, the second user may be determined by sequential order from the top of the queue list, or in a different order.

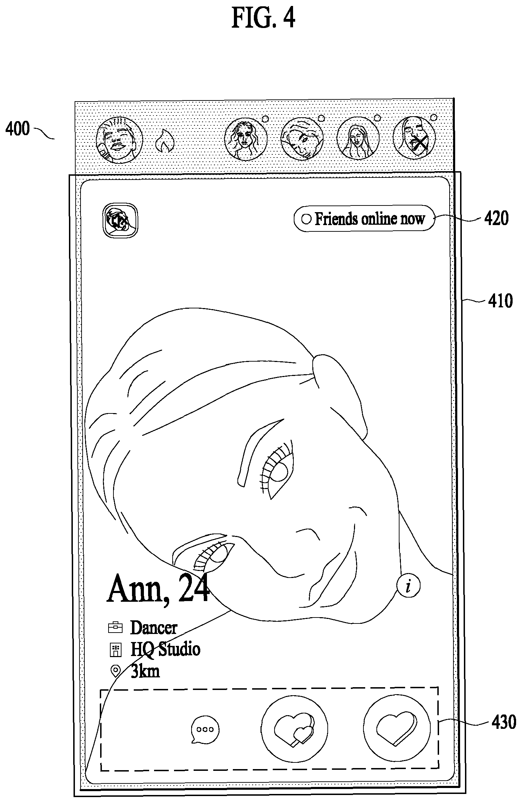

Further, the first user may select any one of the pieces of profile information displayed in the list 320. In this case, the first user may be provided with detailed information about the second user corresponding to the selected profile information. A specific example embodiment thereof will be described with reference to FIG. 4.

FIG. 4 is a diagram illustrating a second screen 400 of the first user terminal 20 according to an example embodiment.

According to an example embodiment, the first user terminal 20 may receive input information indicating the selection of any one of the pieces of profile information of the plurality of second users included in the list 320 of the first screen 200. Then, the first user terminal 20 may receive detailed information about the second user corresponding to the selected profile information from the electronic apparatus 10 according to the input information. The first user terminal 20 may display the detailed information about the selected second user on a second screen 400 while the first screen 200 and the second screen 400 overlap in a pop-up manner. The first user terminal 20 may dim a portion of the first screen 200 that is not covered by the second screen 400 displayed in a pop-up manner.

According to an example embodiment, the second screen 400 may include detailed information 410 about the selected second user. The detailed information 410 may include an image of the selected second user and whether the selected second user has input a good-feeling expression for the first user. As an example, the image of the second user, which is an image provided to the profile provision system 1 by the selected second user, may include photograph information indicating the selected second user. Further, the second screen 400 may further include a label 420 relating to the selected second user. The label 420 may be displayed at a preset position with reference to the detailed information 410. As an example, the label 420 may be displayed on the upper side of the detailed information 410, and specifically, may be located on the upper right side of the image of the second user.

According to an example embodiment, the label 420 may vary depending on whether the selected second user has input a good-feeling expression for the first user. The label 420 may be distinguished by color, text, or the like. For example, when the selected second user is a general online user who has not input a good-feeling expression for the first user, his/her label may be indicated in a green color. When the selected second user is a person who has input a good-feeling expression for the first user, his/her label may be indicated in a purple color. Alternatively, while detailed information 410 about the selected second user is displayed in the form of pop-up view, when the corresponding second user has input a good-feeling expression for the first user, his/her label may remain unchanged. This can further save resources.

According to an example embodiment, the label 420 may also be displayed within the information 220 for a fourth user in FIG. 2. In this case, the label 420 may be different depending on the state of the fourth user being displayed. For example, the label 420 may be different depending on whether the fourth user accessing the profile provision system 1 or whether the fourth user is a person who has input a good-feeling expression for the first user. Further, the label 420 may be different depending on whether the fourth user has input any good-feeling expression for the first user. For example, when the fourth user is currently accessing the profile provision system 1, or when the fourth user inputs a first good-feeling expression button 231 for the first user while accessing the profile provision system 1, his/her label may be displayed in a green color. When the fourth user inputs a second good-feeling expression button 232 for the first user while accessing the profile provision system 1, his/her label may be displayed in a purple color.

According to an example embodiment, the detailed information 410 about the selected second user may further include personal information about the selected second user. As an example, the personal information about the selected second user may include a name, age, occupation, and residence of the second user. Further, the personal information of the selected second user may include approximate distance information from a location of the first user terminal 20 to the residence or other location of the selected second user. Such distance information may be based on location-based information of the first user terminal 20 received by the electronic apparatus 10, and may be information calculated by the electronic apparatus 10 based on the residence information provided to the profile provision system 1 by the first user. Alternatively, the distance information may be information calculated based on location-based information of the first user terminal 20 itself or the residence information provided to the profile provision system 1 by the first user.

According to an example embodiment, the second screen 400 may further include a good-feeling expression region 430 to which the first user inputs a good-feeling expression for the selected second user. Such a good-feeling expression region 430 may be displayed to overlap the detailed information 410 about the selected second user. Detailed descriptions of the good-feeling expression region 430 are similar to those of the good-feeling expression region 230 in FIG. 2 and thus redundant descriptions thereof will be omitted.

According to an example embodiment, a detailed view including more specific information about the selected second user may be output when the first user performs a specific operation, such as scrolling-down, on the second screen 400. Further, the second screen 400 may be displayed again when the first user performs a specific operation, such as scrolling-up, in the detailed view.

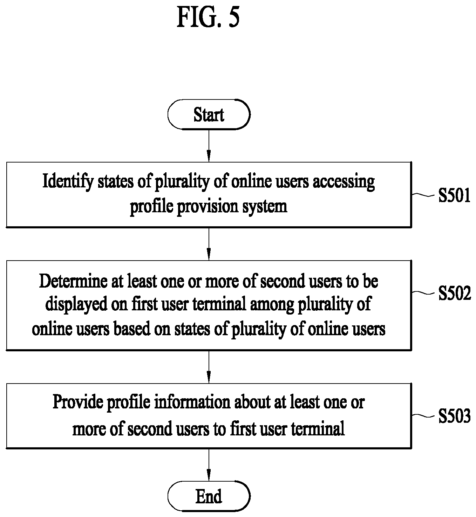

FIG. 5 is a flowchart illustrating a profile provision method according to an example embodiment. An electronic apparatus may be the electronic apparatus 10 of the profile provision system 1, and a terminal may be the first user terminal 20 of the profile provision system 1. Hereinafter, descriptions of constituent elements that are the same as those described with reference to FIG. 1 will be omitted.

In operation S501, a state of each of a plurality of online users accessing the profile provision system 1 may be identified. According to an example embodiment, the state of each of the plurality of online users may include real-time connection information about the respective online user and information about a good-feeling expression history for other online users other than the respective online user, and the like.

In operation S502, at least one or more second users to be displayed in the first user terminal 20 among the plurality of online users may be determined based on the state of each of the plurality of online users. According to an example embodiment, in operation S502, the ranking of each of the plurality of online users may be determined based on the state of each of the plurality of online users, and a predetermined number of second users among the plurality of online users may be selected based on the rankings. According to an example embodiment, the ranking of each of the plurality of online users may be determined based on at least one of whether each online user has input a good-feeling expression for the profile of the first user, the number of good-feeling expressions input by other online users associated with the profile provision system 1, an access time of each online user on the profile provision system 1, and a time duration of maintaining access of each online user to the profile provision system 1. Further, the at least one or more second users may be determined to be in sequential order from the top of a queue of the plurality of online user based on the rankings or in a different order. Alternatively, the queue of the plurality of online user listed based on the rankings may be transmitted to the first user terminal 20, and the first user terminal 20 may determine the at least one or more second users based on the queue, may select a specific second user among the at least one or more second users and display profile information thereof.

In operation S503, pieces of profile information about the at least one or more second users may be provided to the first user terminal 20. According to an example embodiment, the profile information about the at least one or more second users may include an indicator indicating a state of corresponding second users. The state of each of the at least one or more second users may include at least one of whether each of the second users is accessing the profile provision system 1 and whether each of the second users has input a good-feeling expression for the first user.

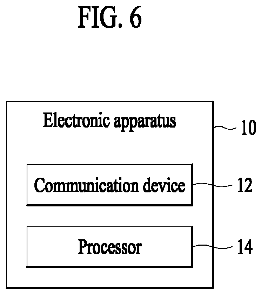

FIG. 6 is a block diagram illustrating the electronic apparatus 10 for providing profile information according to an example embodiment. An electronic apparatus 10 in FIG. 6 may correspond to the electronic apparatus 10 of the profile provision system 1 illustrated in FIG. 1.

According to an example embodiment, the electronic apparatus 10 may include a communication device 12 and a processor 14.

The communication device 12 may communicate with an external electronic apparatus using a wired/wireless communication technology and may include a transceiver. The external electronic apparatus may be a terminal or a server. In addition, examples of the communication technology used by the communication device 12 may include Global System for Mobile communication (GSM), Code Division Multi Access (CDMA), Long Term Evolution (LTE), 5G, Wireless LAN (WLAN), Wireless-Fidelity (Wi-Fi), Bluetooth, Radio Frequency Identification (RFID), Infrared Data Association (IrDA), ZigBee, Near Field Communication (NFC), and/or the like, but the present disclosure is not limited thereto.

The communication device 12 may communicate with the first user terminal 20 to transmit the pieces of profile information of the at least one or more second users to be displayed in the first user terminal 20. Further, the communication device 12 may receive information for determining whether each of users is accessing the profile provision system 1 and has input of a good-feeling expression for the first user. Further, the communication device 12 may receive, from the first user terminal 20, a selection input for the profile information of the second user displayed on the first screen of the first user terminal 20, and may transmit detailed information about the second user corresponding to the selected profile information to the first user terminal 20 in response to the selection input.

The processor 14 may control the overall operation of the electronic apparatus 10 and process data and signals. In an example embodiment, the processor 14 may include at least one processor. According to an example embodiment, the processor 14 may identify a state of each of a plurality of online users accessing the profile provision system 1. Then, the processor 14 may determine at least one or more second users to be displayed in the first user terminal 20 among the plurality of online users based on the state of each of the plurality of online users. Subsequently, the processor 14 may determine at least one or more second users to be displayed in the first user terminal 20. The processor 14 may provide profile information of the at least one or more second users, including an indicator indicating a state of each of the second users, to the first user terminal via the communication device 12.

The processor 14 may determine a ranking of each of the plurality of online users to determine the at least one or more second users. According to an example embodiment, the processor 14 may determine the ranking based on at least one of whether each online user has input a good-feeling expression for the profile of the first user, the number of good-feeling expression input by other online users associated with the profile provision system 1, an access time of each online user to the profile provision system 1, and a time duration of maintaining the accessing of each online user to the profile provision system 1. The processor 14 may select a predetermined number of second users among the plurality of online users based on the determined rankings. To this end, the processor 14 may configure a queue of the plurality of online users, and determine the at least one or more second users from the queue. Further, the process 14 may control the communication device 12 to transmit information about the at least one or more determined second users to the first user terminal 20.

The processor 14 may receive the input of the good-feeling expression for the first user via the communication device 12. Further, the processor 14 may confirm a third user who has input a good-feeling expression for the first user among the plurality of online users, and determine whether the third user is included in the at least one or more second users displayed on the first user terminal 20. When it is determined that the third user is included in the at least one or more second users, the processor 14 may control the communication device 12 to transmit information to the first user terminal 20 such that the indicator included in the profile information of the third user is changed. Meanwhile, when it is determined that the third user is not included in the at least one or more second users, the processor 14 may control the communication device 12 to transmit information to the first user terminal 20 such that the profile information of the third user is included in the list on the first user terminal 20.

The processor 14 may receive input information indicating that one of the pieces of profile information of the at least one or more second users is selected, from the first user terminal 20 via the communication device 12. In this case, the processor 14 may confirm detailed information about the second user corresponding to the selected profile information and provide the detailed information to the first user terminal 20 via the communication device 12.

Meanwhile, the electronic apparatus 10 may further include a storage device (not illustrated). The storage device may store information about a user input via the profile provision system 1. The storage device, which is hardware for storing various pieces of data processed in the electronic apparatus 10, may store a program for processing and control of the processor 14. The storage device may include, for example, a random access memory (RAM) such as a dynamic random access memory (DRAM), a static random access memory (SRAM) or the like, a read-only memory (ROM), an electrically erasable programmable read-only memory (EEPROM), a CD-ROM, a Blu-ray or other optical disk storage, a hard disk drive (HDD), a solid state drive (SSD), a flash memory, and/or the like.

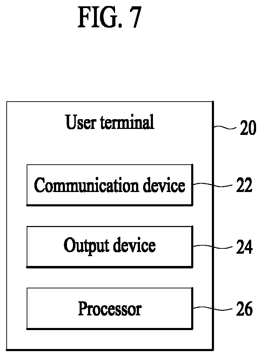

FIG. 7 is a block diagram illustrating the user terminal 20 for providing profile information according to an example embodiment. The user terminal 20 illustrated in FIG. 7 may correspond to the first user terminal 20 and/or the second user terminal 30 of the profile provision system 1.

According to an example embodiment, the user terminal 20 may include a communication device 22, an output device 24, and a processor 26.

The communication device 22 may communicate with an external electronic apparatus 10 using a wired/wireless communication technology like the communication device 12 described above with reference to FIG. 6. According to an example embodiment, the communication device 22 may communicate with the electronic apparatus 10 to receive profile information about at least one or more second users. Further, the communication device 22 may transmit input of a good-feeling expression for the first user to the electronic apparatus 10. Further, the communication device 22 may transmit a selection input for the profile information of each second user displayed in the list to the electronic apparatus 10, and receive detailed information about the second user corresponding to the selected profile information in response to the selection input.

The output device 24 generates a visual-, audial-, or tactile-related output and may include at least one of a display, a sound output part, a haptic module, and/or a light output part. The display may have a layered structure together with a touch sensor, may be integrally formed with the touch sensor, thereby implementing a touch screen. Such a touch screen may function as a user input part configured to provide an input interface between a terminal and a user, and may also provide an output interface between the terminal and the user.

The output device 24 may display a first screen in which the list includes pieces of profile information about the second users, and information about a fourth user whose profile is stored in the profile provision system 1 and is not included in the list are included. Further, the output device 24 may display a second screen in which detailed information about the second user corresponding to the selected profile information is included.

The processor 26 may control the overall operation of the user terminal 20 and process data and signals. According to an example embodiment, the processor 26 may control operations of the communication device 22 and the output device 24 to provide profile information. Further, the processor 26 may connect to the profile provision system 1 via the communication device 22, and receive profile information of at least one or more second users from the electronic apparatus 10 associated with the profile provision system 1 via the communication device 22. Further, the processor 26 may control the output device 24 to display the profile information of the at least one or more second users on the top of the first screen.

According to an example embodiment, the profile information of each of the at least one or more second users may include a profile of each of the second users and an indicator indicating a status of each of the second users. The processor 26 may control the output device 24 to display the indicator of each of the at least one or more second users on the upper top side of the profile.

According to an example embodiment, the user terminal 20 may further include an input device (not illustrated). The input device may include a camera or a video input part that inputs a video signal, a microphone or an audio input part that inputs an audio signal, a user input part (for example, a touch key, a mechanical key, or the like) that receives information from a user. Further, the input device may include one or more sensors that sense at least one of internal information of a terminal, information about the surrounding environment surrounding the terminal, and/or user information. For example, the input device may include at least one of a proximity sensor, an illumination sensor, a touch sensor, a motion sensor, a finger scan sensor, an optical sensor (for example, a camera), a microphone, and/or the like.

According to an example embodiment, the processor 26 may receive information indicating the selection input of any one of the pieces of profile information of the at least one or more second users included in the list, via the input device. Then, the processor 26 may transmit the selection input information to the electronic apparatus 10 via the communication device 22, and receive detailed information about the second user corresponding to the selected profile information. The processor 26 may display a second screen including the detailed information about the second user via the output device 24. In this case, the processor 26 may control the output device 24 to display the second screen while the first screen and the second screen overlap in a pop-up manner.

According to an example embodiment, the detailed information may include an image of the second user corresponding to the selected profile information and whether the second user corresponding to the selected profile information has input a good-feeling expression for the first user. The second screen may further include a label associated with the second user corresponding to the selected profile information, and the processor 26 may control the output device 24 to display the label at a position on the upper right side of the image of the second user.

The apparatus according to example embodiments described above may include a permanent storage such as a disk drive, a communication port for communication with external devices, user interface devices such as a touch panel, keys, and buttons, and/or the like. The methods that are implemented as software modules or algorithms may be stored as program instructions or computer-readable codes executable by the processor on a computer-readable recording medium. Here, examples of the computer-readable recording medium may include magnetic storage media (for example, read only memory (ROM), random access memory (RAM), floppy disk, or hard disk), optically readable media (for example, compact disk-read only memory (CD-ROM) or digital versatile disk (DVD)), and the like. The computer-readable recording medium may be distributed over computer systems connected to each other via a network, and thus, the computer-readable codes may be stored and executed in a distributed fashion. This medium may be read by the computer, stored in the memory, and executed by the processor.

The present example embodiments may be described in terms of functional block components and various processing steps. Such functional blocks may be realized by any number of hardware and/or software components configured to perform specified tasks. For example, embodiments may employ various integrated circuit (IC) components, such as memory elements, processing elements, logic elements, look-up tables, and/or the like, which may perform a variety of tasks under the control of one or more microprocessors or other control devices. Similar to a case in which the constituent elements are implemented using software programming or software elements, the present example embodiments may be implemented with any programming or scripting language such as C, C++, Java, assembler language, or the like, with the various algorithms being implemented with any combination of data structures, processes, routines or other programming elements. Functional aspects may be implemented in algorithms that are executed on one or more processors. Furthermore, the example embodiments described herein could employ related arts for electronic configuration setting, signal processing and/or data processing and the like. The terms "mechanism," "element," "means," and "configuration" may be used broadly and are not limited to mechanical or physical embodiments. These terms may include meaning of a series of routines of software in association with a processor, for example.

The above-described example embodiments are merely examples and other example embodiments may be implemented within the scope of the following claims.

## Claims

1. A method of providing a user profile by an electronic apparatus (10), the method comprising:
identifying, by the electronic apparatus (10), states of a plurality of online users accessing a profile provision system;
determining, by the electronic apparatus (10), at least one or more second users to be displayed in a terminal (20) of a first user among the plurality of online users based on the states of the plurality of online users; and
providing, by the electronic apparatus (10), profile information of the at least one or more second users to the terminal (20) of the first user, which terminal (20) of the first user communicates with the electronic apparatus (10),
wherein the profile information of the at least one or more second users includes an indicator, displayed on a display of the terminal (20) of the first user, indicating a state of a corresponding second user.

2. The method of claim 1, wherein a state of each of the at least one or more second users includes at least one of whether the corresponding second user is currently accessing the profile provision system (1) through a terminal (30-1, 30-2, 30-3, 30-4) of the corresponding second user communicating with the electronic apparatus (10) and whether the corresponding second user has input a user input into its terminal (30-1, 30-2, 30-3, 30-4) representing a good-feeling expression for the first user, and
wherein the indicator is displayed differently by at least one of color, size, shape, location, and motion, based on whether the good-feeling expression has input for the first user.

3. The method of claim 1 or 2, further comprising:
confirming a third user who has input a user input representing a good-feeling expression for the first user among the plurality of online users;
when the third user is included in the at least one or more second users, changing an indicator included in profile information of the third user in the terminal (20) of the first user in response to the input of the good-feeling expression; and
when the third user is not included in the at least one or more second users, providing the profile information of the third user to the terminal (20) of the first user in response to the input of the good-feeling expression.

4. The method of claim 3, wherein the providing of the profile information of the third user to the terminal (20) of the first user comprises:
displaying, on the display of the terminal (20) of the first user, a motion image in a region where the profile information of the third user is to be displayed; and
displaying the profile information of the third user after a preset period of time from the display of the motion image.

5. The method of any of the claims 1 to 4, wherein the profile information of the second user who maintains accessing of the profile provision system (10) among the at least one or more second users is removed from displaying on the terminal (20) of the first user after a first period of time elapses from a time point when the profile information is displayed on the display of the terminal (20) of the first user, and
the profile information of the second user who leaves of the profile provision system (1) among the at least one or more second users is removed from displaying on the terminal (20) of the first user after a second period of time elapses from a time point when the second user ceases to access the profile provision system.

6. The method of any of the claims 1 to 5, wherein the profile information of the at least one or more second users is displayed in a list positioned at a top of a first screen (200) displayed by the display of the terminal (20) of the first user, and
the first screen (200) further includes profile information of a fourth user who is not included in the list, a profile of the fourth user being stored in the profile provision system.

7. The method of claim 6, further comprising:
receiving, from the terminal (20) of the first user, selection input information indicating that one of the profile information of the at least one or more second users displayed in the list has been selected by the first user; and
in response to the reception of the selection input information, providing, by the electronic apparatus (10), detailed information about the second user corresponding to the selected profile information to the terminal (20) of the first user.

8. The method of claim 7, wherein the detailed information about the second user is displayed on a second screen (400) which overlaps the first screen (200) in a pop-up manner on the display of the terminal (20) of the first user.

9. The method of claim 8, wherein the second screen (400) includes a label associated with the second user corresponding to the selected profile information, and
the label is displayed differently depending on whether the second user corresponding to the selected profile information has input a good-feeling expression for the first user.

10. The method of any of the claims 1 to 9, wherein the determining of the at least one or more second users comprises:
determining rankings for the plurality of online users based on the states of the plurality of online users; and
selecting a predetermined number of the second users among the plurality of online users based on the rankings.

11. The method of claim 10, wherein the determining of the rankings of the plurality of online users comprises:
determining the rankings based on at least one of whether each of the plurality of online users has input a good-feeling expression for the profile of the first user, the number of good-feeling expressions input by other online users associated with the profile provision system, an access time of each online user to the profile provision system, and a time duration of maintaining the accessing of each online user to the profile provision system.

12. A terminal (20) of a first user for providing profiles of a plurality of online users to the first user, the terminal comprising:
a communication device (22);
an output device (24); and
a processor (26),
wherein the processor (26) is configured to:
access a profile provision system (1) via the communication device;
receive profile information about at least one or more second users accessing the profile provision system, from an electronic apparatus associated with the profile provision system (1) via the communication device; and
control the output device (24) to display the profile information of the at least one or more second users on a first screen (200),
wherein the at least one or more second users are determined based on a state of each of a plurality of online users accessing the profile provision system, and
the profile information of the at least one or more second users includes an indicator indicating a state of a corresponding second user.

13. The terminal of claim 12, wherein the processor is configured to control the output device to display the indicator on an upper right side in the profile information of each of the at least one or more second users.

14. The terminal of claim 12 or 13, further comprising:
an input device,
wherein the processor (26) is configured to:
receive, via the input device, selection input information indicating that one of the profile information of the at least one or more second users is selected; and
display, via the output device, a second screen (400) including detailed information about the second user corresponding to the selected profile information in response to the reception of the selection input information,
wherein the second screen is displayed so that the second screen overlaps the first screen in a pop-up manner.

15. The terminal of claim 14, wherein the detailed information includes an image of the second user corresponding to the selected profile information and whether the second user corresponding to the selected profile information has input a good-feeling expression for the first user,
the second screen (400) further includes a label associated with the second user corresponding to the selected profile information, and
the label is located on an upper right side of the image and is displayed differently depending on whether the good-feeling expression has input.
